Europäisches Patentamt

European Patent Office

Office européen des brevets

(11) Publication number: **0 155 395**
**B1**

(12) EUROPEAN PATENT SPECIFICATION

(45) Date of publication of patent specification: **07.11.90**

(21) Application number: **84115732.4**

(22) Date of filing: **18.12.84**

(51) Int. Cl.⁵: **B 23 Q 35/128**, G 06 K 11/04

(54) Pattern tracer slowdown circuit.

(30) Priority: **21.03.84 CA 450132**

(43) Date of publication of application:
**25.09.85 Bulletin 85/39**

(45) Publication of the grant of the patent:
**07.11.90 Bulletin 90/45**

(84) Designated Contracting States:
**CH DE FR GB IT LI**

(56) References cited:
**US-A-3 704 372**

(73) Proprietor: **WESTINGHOUSE CANADA INC.**
**Box 510**
**Hamilton Ontario L8N 3K2 (CA)**

(72) Inventor: **Vali, Enn**
**3281 Douglas Street**
**Burlington, Ontario L7N 1G8 (CA)**

(74) Representative: **Haug, Dietmar et al**
**Patentanwälte Andrae, Flach, Haug, Kneissl**
**Steinstrasse 44**
**D-8000 München 80 (DE)**

Courier Press, Leamington Spa, England.

# Description

The invention relates to a circular scanning optical pattern tracer comprising means to generate a first signal indicative of intersection of the pattern and an optical scan of a first diameter, and means to generate a second signal indicative of intersection of the pattern and an optical scan of a second diameter.

Such an optical pattern tracer of the circular scanning non-steering type is disclosed in US-A-3 704 372. Other examples of optical pattern tracers of the circular scanning non-steering type are disclosed in US-A-3 727 120, US-A-3 860 862 and US-A-3 883 735. These tracers normally scan the pattern by reflecting a portion of the pattern from a mirror onto an optically sensitive device. The mirror is rotated to cause the portion of the pattern viewed to rotate about a center and produce a circular scan. The signal produced by the optically sensitive device may then be processed and produced coordinate velocity signals which may be used to cause the tracer to follow in the pattern at a constant tangential velocity. All pattern followers must view the pattern at a point in advance of the actual axis of steering or physical rotation of the apparatus. Failure to provide sufficient advance will result in system instability or inability of the tracer to follow rapid deviation. The degree of advance is related to the accuracy of tracing and a trade-off occurs between the stability of the system, the accuracy of tracing and the velocity of tracing.

The optical pattern tracer disclosed in the aforementioned US-A-3 704 372 includes a mirror assembly which is exchangeable to provide varying scan diameters. However, each mirror assembly provides only one scan diameter at a time.

EP-A-0 137 143, which falls within the field of Article 54 (3) EPC, discloses a circular scanning optical pattern tracer employing two optical scans of different diameter and producing a slow-down signal when there is lack of coincidence between two electrical signals indicative of intersection of the pattern and the respective scans.

An object of the invention is to provide an optical pattern tracer which operates at relatively high tracing speed and slow-down in advance of rapid deviations thus enabling accuracy at the turns and high velocity between turns.

According to the invention, there is provided a circular scanning optical pattern tracer comprising means to generate a first signal indicative of intersection of the pattern and an optical scan of a first diameter, and means to generate a second signal indicative of intersection of the pattern and an optical scan of a second diameter characterized by means to produce from said first and second signals respective control signals of selectively adjustable but equal duration, means to detect the absence of coincidence of said control signals and produce in response thereto, a slow-down signal indicative of the deviation of the pattern from a straight line in advance of the center of rotation of said circular scan and means to utilize said slow-down signal to control the tangential velocity of said tracer.

An embodiment of the invention will now be described by way of example and with reference to the accompanying drawings in which

Figure 1 is a circuit diagram of a system in accordance with this invention, and

Figure 2 is a series of graphs to explain the operation of the circuit of Figure 1.

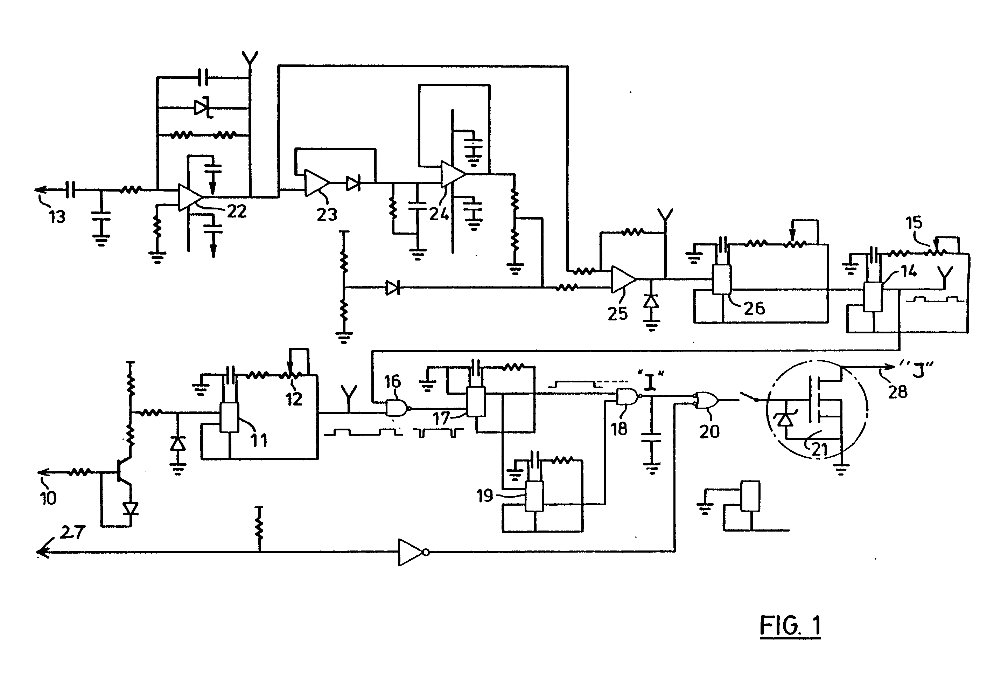

Considering first Figure 1, it will be seen that an input signal from a scanner is applied to terminal 10 and thence to a monostable 11 to nand gate 16 and from nand gate 16 to monostable 17. The output from monostable 17 is applied to nand 18 and monostable 19. The output from nand 18 is applied to nand 20 and the output from nand 20 is applied to Fet 21. The output from Fet 21 is used to control the speed of operation of the system. A further signal derived from a scan of larger diameter is applied to terminal 13 and thence through amplifiers and shapers 22, 23 and 24 and 25 to monostable 26 and the output from monostable 26 is applied to monostable 14. Monostable 14 has adjustable delay and an output which is applied to nand 16. Slow-down enable signal is applied to terminal 27 and thence to nand 20.

Operation

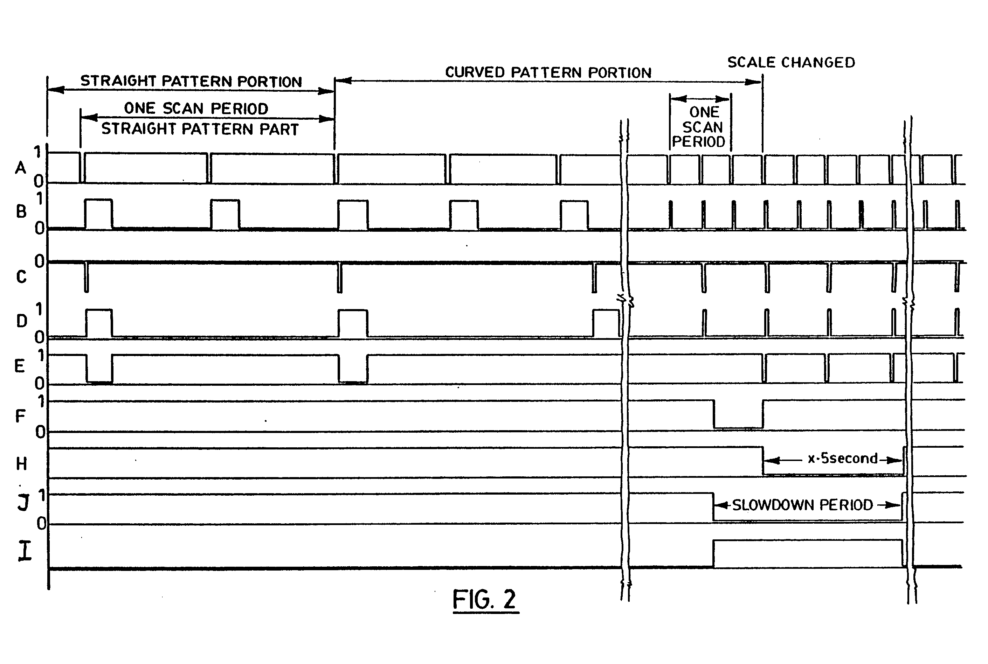

Turning now to Figure 2, it will be seen that input from monostable 26 is shown at A in Figure 2. The signal represents the time of interception of the advance scan and the pattern. The output from monostable 14 is shown at B in Figure 2 and is an adjustable length determined by the value of resistor 15. As a matter of convenience of illustration, it is shown to have a duration of a fixed value. The input of the sample pulse to terminal 10 is shown at C in Figure 2 and at the beginning of these graphs at time 0 it is assumed that there is coincidence between the advance signal of graph A and the sample pulse of graph C. After processing in monostable 11, the sample pulse produces a signal as shown at D in Figure 2, also variable length but of the same length as the output produced from monostable 14 as illustrated at B. Thus the pulses illustrated at B and D in Figure 2 must have the same duration even though they are adjustable in length. The waveforms shown at B and D in Figure 2 are combined in nand 16 and produce an output as shown at E in Figure 2. It will be seen that this output commences with coincidence of the waveform at B and D and terminates when they no longer coincide. This signal is applied to monostable 17 which has a time longer than one complete scanning cycle and therefore monostable 17 is switched into its "on" condition for a period continuing as long as pulses are provided to its input, each scanning cycle in the form of the waveform shown at E. When no such pulses arrive, the monostable times out as shown at F in Figure 2. At a later point in time when pulses are once received from nand 16, monostable is once more triggered into an "on" condition and produced the output as shown in the latter portion of the graph at F. The time scale of the graphs in the latter portion of Figure 2 is substantially different than that in the earlier portion, being approximately a ratio of 5 to 1. This is of no great importance, since it is only provided for purposes of illustration. As will be seen, the waveform F from monostable 17 is triggered once more producing the output shown at the right hand side of Figure 2. An output from monostable 17 is applied to monostable 19 which produces a waveform as shown at H in Figure 2. The waveform is a logic 0 output which commences when the output from monostable 17 goes to logic 1 and continues for about .5 seconds. The output from monostable 17 and 19 are combined in nand 18 to produce an output as shown at I in Figure 2. Presuming a slow-down enable signal which is a logic 0 is applied to terminal 27 and thence to nand 20, the output from nand 20 will be as shown in I and this in turn will be applied to Fet 21 and produce a slow-down signal at terminal 28 as shown at J in Figure 2. It will be noted that the slow-down once commenced continues for a period determined by the length of the waveform shown at H, that is for .5 seconds, even after the slow-down from monostable 17 has terminated. This ensures that the tracer is well clear of the corner or pattern curvature before normal operating is resumed. The slow-down enable signal, that is logic 0 at terminal 27, enables the operator to select slow-down from the operators console. The output from Fet 21 is applied to the normal slow-down circuit to change the speed input to the X and Y control system in a manner well known in the art.

## Claims

1. A circular scanning optical pattern tracer comprising means to generate a first signal indicative of intersection of the pattern and an optical scan of a first diameter, and means to generate a second signal indicative of intersection of the pattern and an optical scan of a second diameter, characterized by means (11, 14) to produce from said first and second signals respective control signals of selectively adjustable but, equal duration, means (17, 19, 21) to detect the absence of coincidence of said control signals and produce in response thereto, a slow-down signal indicative of the deviation of the pattern from a straight line in advance of the center of rotation of said circular scan and means to utilize said slow-down signal to control the tangential velocity of said tracer.

2. A circular scanning optical pattern tracer as claimed in claim 1 wherein the duration of said control signals is determined by a common control.

3. A circular scanning optical pattern tracer as claimed in claim 1 or 2 wherein lack of coincidence of said control signals produces a slow-down signal which continues until a predetermined time after coincidence is re-established.

4. A circular scanning optical pattern tracer as claimed in any one of claims 1 to 3 including means to activate said tracer from a remote location.

## Patentansprüche

1. Optische Abtastvorrichtung zur kreisförmigen Kurvenabtastung mit einer Einrichtung zum Erzeugen eines ersten Signals, das die Überschneidung der Kurve und einer optischen Abtastlinie, die einen ersten Durchmesser aufweist, anzeigt, und einer Einrichtung zum Erzeugen eines zweiten Signals, das die Überschneidung der Kurve und einer optischen Abtastlinie, die einen zweiten Durchmesser aufweist, anzeigt, gekennzeichnet durch eine Einrichtung (11, 14) zum Erzeugen von jeweiligen Steuersignalen, die eine frei einstellbare aber gleiche Dauer haben, aus dem ersten und zweiten Signal, eine Einrichtung (17, 19, 21) zum Ermitteln der fehlenden Übereinstimmung der Steuersignale und zum Erzeugen eines Verlangsamungssignals als Antwort darauf, das die Abweichung der Kurve von einer geraden Linie vor dem Mittelpunkt der Drehung der kreisförmigen Abtastlinie anzeigt, und eine Einrichtung zum Benutzen des Verlangsamungssignals zum Steuern der tangentialen Geschwindigkeit der Abtastvorrichtung.

2. Optische Abtastvorrichtung zur kreisförmigen Kurvenabtastung nach Anspruch 1, bei der die Dauer der Steuersignale durch eine gemeinsame Steuerung bestimmt wird.

3. Optische Abtastvorrichtung zur kreisförmigen Kurvenabtastung nach Anspruch 1 oder 2, bei welcher das Fehlen der Übereinstimmung der Steuersignale ein Verlangsamungssignal erzeugt, das bis zu einem vorbestimmten Zeitpunkt nach der Wiederherstellung der Übereinstimmung fortdauert.

4. Optische Abtastvorrichtung zur kreisförmigen Kurvenabtastung nach einem der Ansprüche 1 bis 3, einschließlich einer Einrichtung zur Fernbedienung der Abtastvorrichtung.

## Revendications

1. Traceur optique de figure, à balayage circulaire, comprenant un moyen de génération d'un premier signal indicateur de l'intersection de la figure et d'une trace de balayage optique d'un premier diamètre et un moyen de génération d'un second signal indicatif de l'intersection de la figure et d'une seconde trace de balayage optique d'un second diamètre, caractérisé par des moyens (11, 14) pour produire, à partir desdits premier et second signaux, des signaux de commande respectifs de durée sélectivement réglable mais égale, des moyens (17, 19, 21) pour détecter l'absence de coïncidence desdits signaux de commande et produire, en réponse à celle-ci, un signal de ralentissement indicatif de l'écart entre la figure et une ligne droite en avance par rapport au centre de rotation de ladite trace de balayage circulaire et un moyen pour utiliser ledit signal de ralentissement pour commander la vitesse tangentielle dudit traceur.

2. Traceur optique de figure, à balayage circulaire, selon la revendication 1, dans lequel la durée desdits signaux de commande est déterminée par une commande commune.

3. Traceur optique de figure, à balayage circulaire, selon la revendication 1 ou 2, dans lequel l'absence de coïncidence desdits signaux de commande produit un signal de ralentissement qui continue pendant un temps prédéterminé après que la coïncidence a été rétablie.

4. Traceur optique de figure, à balayage circulaire, selon l'une des revendications 1 à 3, comprenant des moyens pour actionner ledit traceur depuis un emplacement éloigné.

FIG. 1

"J" 28

21

20

"I" 18

19

17

16

26

25

24

23

22

15 14

13

12 11

10 27

FIG. 2

STRAIGHT PATTERN PORTION

CURVED PATTERN PORTION

SCALE CHANGED

ONE SCAN PERIOD
STRAIGHT PATTERN PART

ONE SCAN PERIOD

x·5second

SLOWDOWN PERIOD

EP 0 155 395 B1